# EUROPÄISCHE PATENTSCHRIFT

(11) **EP 0 776 723 B1**
(45) Veröffentlichungstag und Bekanntmachung des Hinweises auf die Patenterteilung: **28.06.2000**
(21) Anmeldenummer: 96118083.3
(22) Anmeldetag: 12.11.1996
(51) Int. Cl.: B23D 77/04

(54) **Rotierendes Schaftwerkzeug**
Rotating shaft tool
Outil à manche rotatif

(30) Priorität: 29.11.1995 DE 19544378
(43) Veröffentlichungstag der Anmeldung: 04.06.1997
(73) Patentinhaber: August Beck GmbH & Co., D-72474 Winterlingen (DE)
(72) Erfinder: Weber, Dieter, 72459 Albstadt (DE)
(74) Vertreter: Maser, Jochen, Dipl.-Ing.

(56) Entgegenhaltungen:
- CH-A- 546 614
- GB-A- 2 063 732
- US-A- 1 713 646
- US-A- 3 024 674
- US-A- 3 286 557

## Beschreibung

Die Erfindung betrifft ein rotierendes Schaftwerkzeug gemäß dem Oberbegriff des Anspruchs 1.

Aus der DE-OS 42 43 586 ist ein derartiges rotierendes Schaftwerkzeug bekannt, das als eine Maschinenreibahle ausgebildet ist. Bei dieser Maschinenreibahle ist in einem Führungsschlitz eines Grundkörpers ein Messer geführt, das mit einem Ende an einer bolzenförmigen Axialjustierung abgestützt wird. Die Axialjustierung besteht aus einem hohlzylindrischen Anschlagbolzen, dessen geschlitzter Bolzenkopf mittels einer Senkkopfschraube radial aufgeweitet werden kann, wodurch das daran abgestützte Messer in der zur Bolzenachse radialen Richtung feinfühlig verschoben wird. Dadurch läßt sich eine präzise Axialverstellung ermöglichen.

Eine derartige Axialjustierung ist jedoch aufgrund der kegeligen Flanke eines Senkkopfes der Senkkopfschraube in der radialen Aufweitung und somit in der Axialverstellung auf einen relativ geringen Stellweg begrenzt.

Der Erfindung liegt deshalb die Aufgabe zugrunde, ein rotierendes Schaftwerkzeug der gattungsgemäßen Art zu schaffen, das eine feinfühlig präzise Justierung des Messers in Längsrichtung des Führungsschlitzes und eine Vergrößerung des Verstellbereiches ermöglicht.

Diese Aufgabe wird erfindungsgemäß durch die kennzeichnenden Merkmale des Anspruchs 1 gelöst.

Das zumindest eine an einer Stirnfläche des Schneidmessers angreifende Spannmittel mit einer zumindest ballig ausgebildeten Angriffsfläche kann mit einem von außen ohne weiteres zugänglichen weiteren Spannmittel einstellbar sein, wobei durch die Anordnung des ersten Spannmittels in einem an den Führungsschlitz angrenzenden Führungsabschnitt ein wesentlich vergrößerter Verstellbereich gegeben sein kann. Durch die ballige Ausführung der Angriffsfläche kann eine definierte punktförmige Anlage gegeben sein, wodurch eine Axialverschiebung mit definierten Kraftübertragungsverhältnissen erfolgen kann, die ausschließlich eine axiale Kraftkomponente aufweisen. Das Messer kann während der Betätigung der Axialjustierung leicht geklemmt im Führungsschlitz verbleiben, so daß seine Position mit einem Meßtaster unmittelbar während der Einstellung kontrolliert werden kann.

Des weiteren weist die erfindungsgemäße Anordnung den Vorteil auf, daß durch die Abweichung der Bewegungsrichtung des weiteren Spannmittels von dem ersten Spannmittel eine anwendungsspezifische Anordnung für Schaftwerkzeuge geschaffen werden kann, die eine einfach zugängliche Einstellung von außen ermöglicht.

Nach einer vorteilhaften Ausgestaltung der Erfindung ist vorgesehen, daß das erste Spannmittel kugelförmig ausgebildet ist. Dadurch können nur sehr geringe Reibverluste auftreten, wodurch eine leichtgängige und fein einstellbare Axialjustierung gegeben sein kann.

Des weiteren weist die erfindungsgemäße Ausgestaltung und Anordung eines kugelförmigen Spannmittels den Vorteil auf, daß die Größe des Verstellbereiches durch die Größe der kugelförmigen Ausbildung gegeben sein kann. Der axiale Verstellbereich ist nur geringfügig kleiner als der Durchmesser des kugelförmigen Spannmittels, um sicherzustellen, daß bei maximaler Axialverstellung das kugelförmige Spannmittel in seiner Führung gehalten werden kann.

Nach einer weiteren vorteilhaften Ausgestaltung der Erfindung ist vorgesehen, daß das erste Spannmittel als stiftförmiges Spannelement mit einer zur Stirnfläche des Schneidmessers angeordneten balligen Angriffsfläche vorgesehen ist. Dadurch kann die Größe des Verstellbereiches weiterhin vergrößert werden.

Nach einer weiteren vorteilhaften Ausgestaltung der Erfindung ist vorgesehen, daß eine Krafteinleitung zwischen dem Spannmittel und dem weiteren Spannmittel in einem Bereich zwischen 1° und 90° vorgesehen sein kann, wobei bevorzugt ein Bereich kleiner/gleich 45° vorgesehen ist. Dadurch können günstige Übertragungsverhältnisse geschaffen werden, bei denen die axiale Zustellung des weiteren Spannmittels im gleichen Verhältnis auf die Axialverstellung des Schneidmessers übertragen werden kann. Des weiteren ist bei dieser besonderen Ausgestaltung vorteilhaft, daß das axiale Spannmittel im wesentlichen rechtwinklig zu der im wesentlichen axialen Verstellrichtung des kugelförmigen Spannmittels vorgesehen ist. Dadurch kann das weitere Spannmittel radial nach außen geführt und von außen gut zugänglich gemacht werden. In Abhängigkeit des Durchmessers vom Grundkörper kann das weitere Spannmittel in seiner Länge angepaßt werden, so daß eine einfache Axialverstellung aufrechterhalten werden kann, die von außen leicht zugänglich ist.

Nach einer weiteren vorteilhaften Ausgestaltung der Erfindung ist vorgesehen, daß das Spannmittel in einer Führung vorgesehen ist, die gegenüber einer Rotationsachse leicht nach innen geneigt ist. Dadurch kann erzielt werden, daß bei der Axialverstellung das Messer in dem Führungsschlitz nur axial verstellt wird, ohne daß das leicht im Führungsschlitz geklemmte Schneidmesser radial nach außen wandern kann.

Nach einer weiteren vorteilhaften Ausgestaltung der Erfindung ist vorgesehen, daß die Stirnfläche des Messers einen Winkel von weniger als 90° zum Grund des Führungsschlitzes aufweist. Dadurch kann ebenfalls - wie durch die nach innen geneigte Anordnung des Führungsschlitzes - erzielt werden, daß bei der Axialverstellung, bei der das Messer leicht geklemmt im Führungsschlitz bleibt, ein radiales Nachaußenwandern verhindert werden kann. Alternativ können auch beide vorteilhafte Ausführungsformen, wonach eine nach innen geneigte Führung des kugelförmigen Spannmittels auf eine Stirnfläche des Messers wirkt, die unter einem Winkel von weniger als 90° zum Grund des Führungsschlitzes angeordnet ist, vorgesehen sein.

In den weiteren Ansprüchen sind vorteilhafte Ausgestaltungen und Weiterbildungen der Erfindung angegeben.

In der Zeichnung sind bevorzugte Ausführungsbeispiele dargestellt und in der nachfolgenden Beschreibung näher erläutert. Es zeigen:
- Fig. 1: eine schematische Seitenansicht eines vorderen Bereiches einer Stufenreibahle gemäß der Erfindung,
- Fig. 2: eine vergrößerte Darstellung des Bereiches 2 aus Fig. 1,
- Fig. 3: eine Draufsicht auf den Bereich 2 in Pfeilrichtung 3 von Fig. 1 gesehen,
- Fig. 4: eine schematische Schnittdarstellung gemäß der Linie IV-IV in Fig. 2 und
- Fig. 5: einen schematischen Teilschnitt einer alternativen Ausführungsform des vorderen Bereichs einer Stufenreibahle gemäß der Erfindung.

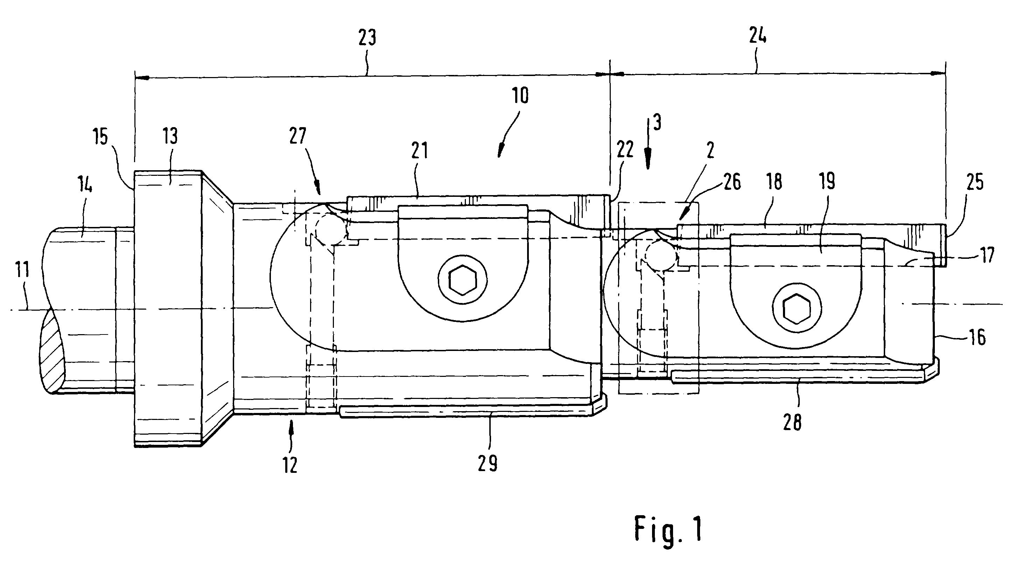

Das als Stufenreibahle ausgebildete rotierende Schaftwerkzeug 10 gemäß Fig. 1 hat in an sich bekannter Weise einen etwa bezüglich einer geometrischen Längsachse 11 bzw. Rotationsachse 11 koaxialen, zylindrischen Grundkörper 12, der links einen Anschlagbund 13 und einen Einspannschaft 14 aufweist. Der Anschlagbund 13 hat eine schaftseitige Stirnringfläche 15, die dazu dient, die Reibahle in einer definierten axialen Position bezüglich eines Maschinenbohrkopfes auszurichten.

Im Grundkörper 12 ist zur rechten Stirnfläche 16 ausmündend ein parallel zur Rotationsachse 11 verlaufender Führungsschlitz 17 ausgebildet, in dem ein längliches blättchenförmiges Messer 18 geführt und mittels einer Spannpratze 19 fixiert ist. Diese Ausbildung ist an sich bekannt und braucht nicht näher erläutert zu werden. Im Ausführungsbeispiel ist in einem mittleren Bereich des Grundkörpers 12 ein zweites gleichartiges Messer 21 in derselben Art gelagert. Die beiden Messer 18, 21 sollen veranschaulichen, welche Bedeutung die axiale Justierung hat.

So hat die rechte Schneidkante 22 des Messers 21 einen vorgegebenen Abstand 23 zur Stirnringfläche 15 und einen weiteren vorgegebenen Abstand 24 zur rechten Schneidkante 25 des Messers 18. Diese Abstände sind genau einzuhalten, und dies verdeutlicht, warum eine Axialjustierung 26, 27 für beide Messer erforderlich ist.

Aber auch, wenn nur ein Messer 21 vorhanden ist, bedarf es der Einstellung des Abstandes 23, wenn die Reibahle an eine numerisch gesteuerte Bearbeitungsmaschine mittels des Anschlagbundes 13 in einer definierten Position eingespannt wird. Bei einer Maschinenreibahle ohne einer solchen Positioniereinrichtung kann es schließlich notwendig sein, die Schneidkanten 22 oder 25 gegenüber den stirnseitigen Enden von Führungsleisten 28 oder 29 einzustellen, insbesondere dann, wenn die Messer nachgeschliffen werden.

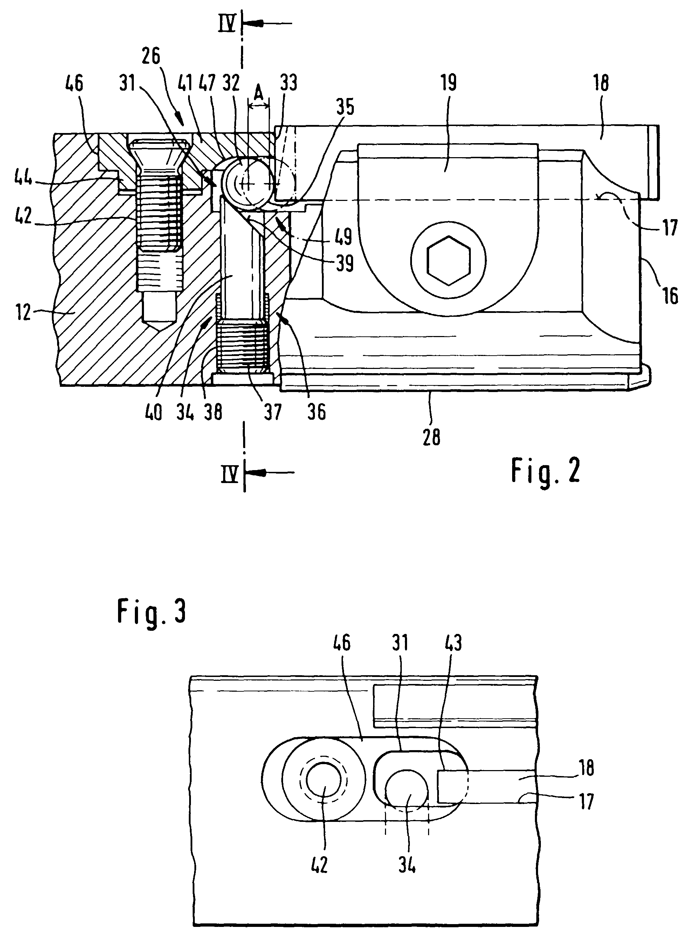

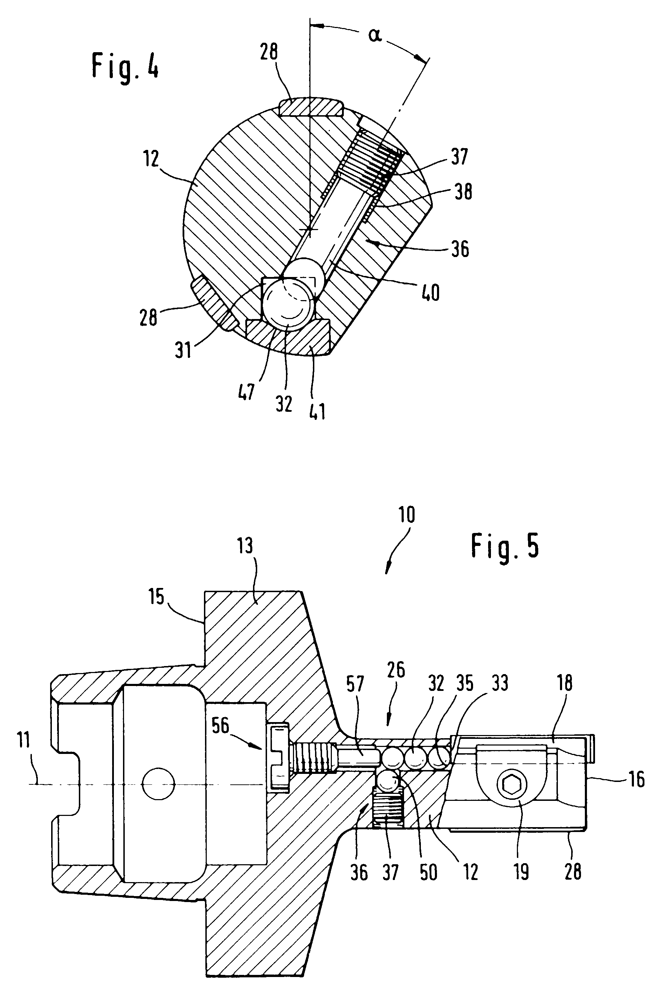

Genaue Details werden am Beispiel der Axialjustierung 26, 27 in den Fig. 2 bis 4 und bezüglich der Alternative in Fig. 5 aufgezeigt.

Am Auslauf des Führungsschlitzes 17 ist im Grundkörper 12 ein axialer Führungsabschnitt 31 vorgesehen, der ein kugelförmiges Spannmittel 32 aufnimmt. Dieses kugelförmige Spannmittel 32 ist eine Stahlkugel, wie sie beispielsweise in Kugellagern verwendet wird. Die Kugel 32 ist axial in dem Führungsabschnitt 31 bewegbar und liegt an einer Stirnfläche 33 des Schneidmessers 18 an. Rechtwinklig zu dem Führungsabschnitt 31 ist ein zweiter Führungsabschnitt 34 vorgesehen, der radial nach außen bis zur Mantelfläche des Grundkörpers verläuft. In diesem Führungsabschnitt 34 ist ein weiteres Spanmittel 36 axial verschiebbar durch ein als Gewindestift ausgebildetes Einstellmittel 37 angeordnet. Das Einstellmittel 37 weist eine Vertiefung auf, in die formschlüssig ein Werkzeug positionierbar ist und die Einstellung ermöglicht. Der Führungsabschnitt 34 ist als Bohrung ausgebildet, die in einem radial äußeren Bereich ein Feingewinde 38 zur Aufnahme des Einstellmittels 37 aufweist. Daran schließt sich ein Bohrungsabschnitt mit einer zylindrischen Wandung an, in der das stiftförmige Spannmittel 36 radial bewegbar ist. Damit eine Verkantung vermieden werden kann und somit eine leichte Einstellung der Axialjustierung 26, 27 gegeben ist, sind relativ enge Toleranzen zwischen Bohrung 33 und zylindrischem Spannmittel 36 vorgesehen. Das Spannmittel 36 weist an seinem zur Kugel 32 weisenden Ende eine Keilfläche 39 bzw. Schrägfläche auf, die an der Kugel 32 angreift. Durch das Zustellen des Einstellmittels 37 wird das Spannmittel 36 auf die Kugel 32 zubewegt, wobei durch das zwischen Keilfläche 39 und Kugel 32 gebildete Keilgetriebe die Kugel 32 axial auf die Stirnfläche 33 des Schneidmessers 18 bewegt wird. Dabei ist eine Krafteinleitung auf die Kugel 32 in einem Winkel von in etwa 45° vorgesehen. Durch die punktförmige Berührung zwischen der Keilfläche 39 und der Kugel 32 als auch dem Führungsabschnitt 31 und der Kugel 32 sowie der Stirnfläche 33 und der Kugel 32 ist eine Axialjustierung 26, 27 ermöglicht, bei der nur minimale Reibkräfte zu überwinden sind. Durch die Zustellung der Einstellschraube 37 kann das Schneidmesser 18 achsparallel in Richtung auf die Stirnfläche 16 des Grundkörpers 12 feinfühlig und genau bewegt werden.

Die Genauigkeit der Axialjustierung liegt im hundertstel Millimeterbereich. Dafür ist vorteilhafterweise eine als Gewindestifte ausgebildete Einstellschraube 37 vorgesehen, die ein Feingewinde aufweist. Dadurch kann eine sehr feine Zustellung gegeben sein, die über die Spannmittel 32, 36 direkt übertragen werden können.

Zur einfachen Herstellung eines Führungsabschnittes 31 ist vorgesehen, daß mit einem Fräswerkzeug in radialer Richtung in den Grundkörper 12 ein Teil des Führungsabschnittes gefräst wird, der anschließend durch eine Abdeckplatte 41 über eine lösbare Schraubverbindung 42 zu einem Führungsabschnitt 31 ausgebildet wird. Die Abdeckplatte 41 weist vorteilhafterweise in Richtung auf die Stirnfläche 16 eine U-förmige Ausnehmung 43 auf, die zumindest teilweise das Schneidmesser 18 am Auslauf des Führungsschlitzes 17 umgreift. Dies hat des weiteren den Vorteil, daß die Größe des Verstellbereiches für die Axialverstellung vergrößert sein kann. Darüber hinaus kann sichergestellt werden, daß bei einer maximalen Axialverstellung die Kugel 32 in dem Führungsabschnitt 31 gehalten werden kann.

Die Abdeckplatte 41 weist einen radial nach innen weisenden Bund 44 auf, wodurch sichergestellt ist, daß bei der Positionierung der Abdeckplatte 41 in einer Ausnehmung 46 des Grundkörpers 12 positioniert werden kann und die axial und radial wirkenden Kräfte der Axialjustierung 26, 27 sicher aufgenommen werden können. Die zum Spannmittel 32 weisende Führungsfläche 47 der Abdeckplatte 41 ist vorteilhafterweise kreisbogenförmig ausgebildet und an den Kugeldurchmesser des Spannmittels 32 angepaßt.

Die Führungsleisten 28 können in Abhängigkeit des Anwendungsfalles länger als das Schneidmesser 18 ausgebildet sein. Um eine Axialjustierung 26, 27 gemäß der in Fig. 2 dargestellten Art auszubilden, bei der nur ein kugelförmiges Spannmittel 32 eingesetzt wird, ist vorteilhafterweise gemäß Fig. 4 vorgesehen, daß der radial nach außen laufende Führungsabschnitt 34 in einem Winkel α vorgesehen ist, damit die Führungsleiste 28 in ihrer erforderlichen Länge ausgebildet werden und an dem Führungsabschnitt 34 vorbeigeführt werden kann.

Alternativ kann vorgesehen sein, daß der Führungsabschnitt 31 länger ausgebildet sein kann, wobei dann mehrere Spannmittel 32 hintereinander anordenbar sind, so daß der radial nach außen verlaufende Führungsabschnitt 34 in einem beliebigen Winkel radial nach außen laufen kann, ohne daß eine Beschränkung des Verlaufs durch die Führungsleisten 28 gegeben ist.

Eine nicht dargestellte vorteilhafte Ausführungsform des Führungsabschnittes 31 kann dadurch gegeben sein, daß die Längsachse des Führungsabschnitts 31 zur Rotationsachse 11 nach innen geneigt ist. Dadurch können die Spannmittel 32 von außen nach innen auf die Stirnfläche 33 des Schneidmessers 18 wirken, so daß bei der Axialverstellung das im Führungsschlitz 17 leicht geklemmte Schneidmesser 18 nur in axialer Richtung bewegt wird und ein radiales Nachaußenwandern verhindert werden kann.

Alternativ kann ebenso eine winklige Anordnung der Stirnfläche 33 vorgesehen sein, wie dies strichliniert dargestellt ist.

In Fig. 2 ist das Schneidmesser 18 in einer Endposition dargestellt, bei der die Stirnfläche 33 im Grund der U-förmigen Ausnehmung 43 anliegt. Beim Zustellen des Einstellmittels 37 wird das Spannmittel 36 radial auf die Kugel 32 zubewegt, wodurch über die Keilfläche 29 die radiale Zustellbewegung in eine axiale Bewegung in Richtung auf die Stirnfläche 16 des Grundkörpers 12 der Kugel 32 umgesetzt wird. Eine maximale Axialstellung ist dann gegeben, wenn die Keilfläche 39 des Spannmittels 36 gerade noch tangential an der Kugel 32 anliegt. Eine Zwischenposition 49 ist strichliniert dargestellt, bei der eine Axialverstellung 26, 27 gemäß der Strecke A erfolgt ist.

Bei der Axialjustierung 26, 27 ist zu berücksichtigen, daß die Keilfläche 39 des Spannmittels 36 zumindest eine Länge aufweist, die dem Durchmesser des kugelförmigen Spannmittels 32 entspricht, damit der maximale Verstellweg ausgenutzt werden kann. Des weiteren darf die Keilfläche 39 des Spannmittels 36 nicht überdimensionsiert sein, um den Grundkörper 12 durch die dann erforderliche Größe des Führungsabschnitts 34 nicht zu schwächen.

Alternativ kann ebenso vorgesehen sein, daß die Spannmittel 32 einzeln oder zu mehreren in dem Führungsabschnitt 36 angeordnet sind, die auf das Spannmittel 32 einwirken, wobei der Stift 40 an dem zur Stirnfläche 33 des Schneidmessers 18 weisenden Ende eine ballige oder halbkreisförmige Angriffsfläche 35 aufweist.

In Fig. 5 ist eine alternative Ausführungsform der Axialjustierung 26, 27 dargestellt. Der Führungsabschnitt 31 ist als eine achsparallele Bohrung zur Rotationsachse 11 ausgebildet. Die Kugeln 32 können von der Stirnringfläche 15 her gesehen in den Führungsabschnitt 31 eingebracht werden, der mit einem Verschlußelement 56, das vorzugsweise als Schraube ausgebildet ist, abgeschlossen ist. Das Verschlußelement 56 wird vorteilhafterweise in den Führungsabschnitt 51 eingeklebt, so daß ein unbeabsichtigtes Lösen verhindert werden kann. Die Klebeverbindung ist derart vorgesehen, daß mit einem Werkzeug die Klebeverbindung gelöst werden kann und das Verschlußelement 56 aus dem Führungsabschnitt 31 herausgeschraubt wird. Das Verschlußelement 56 weist einen zur Axialjustierung 26, 27 weisenden stiftförmigen Abschnitt 57 auf, der zumindest teilweise in den radialen Führungsabschnitt 34 eingreift. Dabei ist vorgesehen, daß der stiftförmige Abschnitt 57 soweit in den Führungsabschnitt 34 hineinragt, daß die Rotationsachsen der Spannmittel 32 und 36 zueinander versetzt angeordnet sind, so daß eine Krafteinleitung des ebenfalls als Kugel ausgebildeten Spannmittels 32 in einem Winkel zwischen 89° und 1° erfolgen kann.

Der Führungsabschnitt 31 ist in diesem Ausführungsbeispiel länger ausgebildet und nimmt beispielhaft drei Kugeln 32 auf. Bei längeren Führungsabschnitten 31, 34 kann ebenso vorgesehen sein, daß eine Kombination aus beiden Spannmitteln 32, 36 in einem Führungsabschnitt 31, 34 vorgesehen ist. Dabei kann ein stiftförmiges Spannmittel 36 einfach auf die Länge des Führungsabschnitts 31, 34 anpaßbar sein, ohne daß ein geeigneter Durchmesser oder Querschnitt der Führungsabschnitte 31, 34 geändert werden müßte. Dadurch kann bei dieser Ausführungsform eine winklige Anordnung des Führungsabschnitts 34 im Querschnitt gesehen, wie dies in Fig. 4 dargestellt ist, entfallen. Die Axialjustierung 26, 27 erfolgt analog der in Fig. 2 bis 4 beschriebenen Axialverstellung 26, 27.

Alternativ kann bei der Axialjustierung 26, 27 der Führungsabschnitt 34 in einem von 90° zu dem Führungsabschnitt 34 abweichenden Winkel vorgesehen sein. Des weiteren kann die Axialjustierung 26, 27 bei einem Stufenwerkzeug 10 vorgesehen sein, bei der breite Stufen bearbeitet werden sollen, wodurch ein Messer senkrecht zur Bohrerachse ausgerichtet werden kann. Dadurch kann die Axialjustierung als Radialjustierung zur Einstellung des Bohrerradius verwendet werden.

Allen Ausführungen ist gemeinsam, daß das Einstellmittel 37 frei von außen zugänglich ist. Des weiteren kann eine derartige Axialjustierung 26, 27 bei Einmesser-Reibahlen, Stufenwerkzeugen, Feinbohrwerkzeugen als auch bei Schaftwerkzeugen vorgesehen sein, die das Schneidmesser 18 in einer Kassette aufnehmen.

## Patentansprüche

1. Rotierendes Schaftwerkzeug mit einem Grundkörper (12), mit einem Führungsschlitz (17) im Grundkörper (12), in dem zumindest ein längliches Schneidmesser (18) anordenbar ist und mit einer im Auslauf des Führungsschlitzes (17) anordenbaren Axialjustierung (26, 27), durch die das Schneidmesser (18) axial im Führungsschlitz (17) einstellbar ist, dadurch gekennzeichnet, daß zur Stirnfläche (33) des Schneidmessers (18) zumindest ein erstes, das Schneidmesser (18) in axialer Richtung bewegbares Spannmittel (32) mit zumindest einer an dem Schneidmesser (18) ballig ausgebildeten Angriffsfläche (35) in einem Führungsabschnitt (31) positionierbar ist, wobei das Spannmittel (32) mit zumindest einem weiteren, von der Bewegungsrichtung des Spannmittels (32) abweichenden Spannmittel (36) einstellbar ist.

2. Rotierendes Schaftwerkzeug nach Anspruch 1, dadurch gekennzeichnet, daß das erste Spannmittel (32) kugelförmig ausgebildet ist.

3. Rotierendes Schaftwerkzeug nach Anspruch 1, dadurch gekennzeichnet, daß das erste Spannmittel (32) als stiftförmiges Spannelement mit einer zur Stirnfläche (33) des Schneidmessers (18) angeordneten balligen Angriffsfläche (35) vorgesehen ist.

4. Rotierendes Schaftwerkzeug nach Anspruch 1, dadurch gekennzeichnet, daß die Krafteinleitung zwischen dem Spannmittel (32) und dem weiteren Spannmittel (36) in einem Winkel zwischen 1° und 89° vorgesehen ist.

5. Rotierendes Schaftwerkzeug nach Anspruch 1, dadurch gekennzeichnet, daß die Krafteinleitung zwischen dem Spannmittel (32) und dem weiteren Spannmittel (36) in einem Winkel im Bereich von kleiner/gleich 50° vorgesehen ist.

6. Rotierendes Schaftwerkzeug nach Anspruch 1, dadurch gekennzeichnet, daß die Krafteinleitung zwischen dem Spannmittel (32) und dem weiteren Spannmittel (36) in etwa 45° beträgt.

7. Rotierendes Schaftwerkzeug nach einem der vorhergehenden Ansprüche, dadurch gekennzeichnet, daß das Spannmittel (32) in einem zur Rotationsachse (11) achsparallelen Führungsabschnitt (31) angeordnet ist.

8. Rotierendes Schaftwerkzeug nach einem der Ansprüche 1 bis 4, dadurch gekennzeichnet, daß das zumindest eine Spannmittel (32) in einem Führungsabschnitt (31) angeordnet ist, der zumindest leicht gegenüber einer Rotationsachse (11) nach innen geneigt ist.

9. Rotierendes Schaftwerkzeug nach einem der vorhergehenden Ansprüche, dadurch gekennzeichnet, daß der Führungsabschnitt (31) zur Aufnahme des zumindest einen Spannmittels (32) als Bohrung ausgebildet ist.

10. Rotierendes Schaftwerkzeug nach einem der Ansprüche 1 bis 6, dadurch gekennzeichnet, daß der Grundkörper (12) eine im Auslauf des Führungsschlitzes (17) randoffene Ausnehmung (46) aufweist, die durch ein Abdeckelement (41) verschließbar ist und einen Führungsabschnitt (31) bildet.

11. Rotierendes Schaftwerkzeug nach einem der vorhergehenden Ansprüche, dadurch gekennzeichnet, daß das Spannmittel (32) als Stahlkugel ausgebildet ist.

12. Rotierendes Schaftwerkzeug nach einem der vorhergehenden Ansprüche, dadurch gekennzeichnet, daß das weitere Spannmittel (36) in einem Führungsabschnitt (34) anordenbar ist, der sich im wesentlichen radial zur Axialverstellung erstreckt.

13. Rotierendes Schaftwerkzeug nach einem der vorhergehenden Ansprüche, dadurch gekennzeichnet, daß das weitere Spannmittel (36) ein axial in dem Führungsabschnitt (34) bewegbarer Stift (40) mit einer zum Führungsabschnitt (31) weisenden Keilfläche (39) ausgebildet ist.

14. Rotierendes Schaftwerkzeug nach einem der Ansprüche 1 bis 11, dadurch gekennzeichnet, daß das weitere Spannmittel (36) als Stahlkugel ausgebildet ist.

15. Rotierendes Schaftwerkzeug nach einem der vorhergehenden Ansprüche, dadurch gekennzeichnet, daß ein in dem Führungsabschnitt (34) anordenbares Einstellmittel (37) vorgesehen ist, durch das die Spannmittel (36) axial in dem Führungsabschnitt (34) verschiebbar ist.

16. Rotierendes Schaftwerkzeug nach Anspruch 14, dadurch gekennzeichnet, daß das Einstellmittel (37) als Gewindestift ausgebildet ist.

17. Rotierendes Schaftwerkzeug nach einem der vorhergehenden Ansprüche, dadurch gekennzeichnet, daß die Stirnfläche (33) des Schneidmessers (18) rechtwinklig zur Rotationsachse (11) nach außen verlaufend vorgesehen ist.

18. Rotierendes Schaftwerkzeug nach einem der Ansprüche 1 bis 15, dadurch gekennzeichnet, daß die Stirnfläche (33) des Schneidmessers (18) in einem Winkel von weniger als 90° zum Führungsschlitz (17) des Schneidmessers (18) vorgesehen ist.

19. Rotierendes Schaftwerkzeug nach einem der vorhergehenden Ansprüche, dadurch gekennzeichnet, daß in dem Führungsabschnitt (31) mehrere hintereinander angeordnete Spannmittel (32) anordenbar sind.

20. Rotierendes Schaftwerkzeug nach einem der vorhergehenden Ansprüche, dadurch gekennzeichnet, daß in dem Führungsabschnitt (36) mehrere hintereinander angeordnete Spannmittel (32) anordenbar sind.

21. Rotierendes Schaftwerkzeug nach einem der vorhergehenden Ansprüche, dadurch gekennzeichnet, daß die maximale Größe des Verstellbereiches der Axialjustierung (26, 27) durch den Durchmesser des Spannmittels (32) bestimmbar ist.

22. Rotierendes Schaftwerkzeug nach einem der vorhergehenden Ansprüche, dadurch gekennzeichnet, daß der Führungsabschnitt (34) in einem Bereich zwischen Führungsleisten (28) radial nach außen führbar ist.

## Claims

1. A rotating shaft tool, comprising a body (12) having a guide slot (17) in which at least one elongated cutting blade (18) can be arranged an axial adjustment device (26, 27) arranged at the mouth of said guide slot (17) by means of which said cutting blade (18) can be adjusted axially in said guide slot (17), wherein at least a first force exerting element (32) with at least one rounded contact surface (35) is positioned towards an end face (33) of said cutting blade (18) for moving said cutting blade (18) in an axial direction, and at least one second force exerting element (36) for adjusting said first force exerting element (32), which second force exerting element (36) deviates from the direction of movement of said first force exerting element (32).

2. A rotating shaft tool according to claim 1, wherein said first force exerting element (32) is spherical.

3. A rotating shaft tool according to claim 1, wherein said first force exerting element (32) is in the form of a pin with a rounded contact surface (35) arranged towards said end face (33) of said cutting blade (18).

4. A rotating shaft tool according to claim 1, wherein said second force exerting element (36) exerts force against said first force exerting element (32) at an angle in the range between one degree and eighty-nine degrees.

5. A rotating shaft tool according to claim 1, wherein said second force exerting element (36) exerts force against said first force exerting element (32) at an angle equal to or less than fifty degrees.

6. A rotating shaft tool according to claim 1, wherein said second force exerting element (36) exerts force against said first force exerting element (32) at an angle of about forty-five degrees.

7. A rotating shaft tool according to claim 1, wherein said first force exerting element (32) is arranged in a first guide (31) that is axially parallel to the axis of rotation (11) of said rotating shaft tool.

8. A rotating shaft tool according to one of the claims 1 to 4, wherein said at best one first force exerting element (32) is arranged in a first guide (31) that is at least slightly inclined inward with respect to the axis of rotation (11).

9. A rotating shaft tool according to one of the preceding claims, wherein said first guide (31) comprises a bore for receiving said at least one first force exerting element (32).

10. A rotating shaft tool according to one of the claims 1 to 6, wherein said body (12) has an outwardly open recess (46) located at the mouth of said guide slot (17), further comprising a cover element (41) for closing said recess (46) and to form a first guide (31).

11. A rotating shaft tool according to one of the preceding claims, wherein said first force exerting element (32) comprises a steel ball.

12. A rotating shaft tool according to one of the preceding claims, wherein said second force exerting element (36) is arranged in a second guide (34) that extends substantially radially with respect to said axial adjustment device (26, 27).

13. A rotating shaft tool according to one of the preceding claims, wherein said second force exerting element (36) comprises a pin (40) axially movable in said second guide (34) and has a wedge surface (39) facing towards said first guide (31).

14. A rotating shaft tool according to one of the claims 1 to 11, wherein said second force exerting element (36) comprises a steel ball.

15. A rotating shaft tool according to one of the preceding claims, wherein an adjusting element (37) is arranged in said second guide (34) for displacing said second force exerting element (36) axially in said second guide (34).

16. A rotating shaft tool according to claim 15, wherein said adjusting element (37) comprises a set screw.

17. A rotating shaft tool according to one of the preceding claims, wherein said end face (33) of said cutting blade (18) extends outwardly at right angles to the axis of rotation (11).

18. A rotating shaft tool according to one of the claims 1 to 15, wherein said end face (33) of said cutting blade (18) extends at an angle of less than ninety degrees to said guide slot (17).

19. A rotating shaft tool according to one of the preceding claims, wherein a plurality of said first force exerting elements (32) are arranged one behind the other in said first guide (31).

20. A rotating shaft tool according to one of the preceding claims, wherein a plurality of said first force exerting elements (32) are arranged one behind the other in said second guide (34).

21. A rotating shaft tool according to one of the preceding claims, wherein the diameter of said first force exerting element (32) determines the maximum displacement range of said axial adjustment device (26, 27).

22. A rotating shaft tool according to one of the preceding claims, wherein said second guide (34) extends radially outward between said guide bars.

## Revendications

1. Outil à manche rotatif comprenant un corps de base (12), avec une fente de guidage (17) dans le corps de base (12), dans laquelle peut être disposée au moins une lame de coupe longitudinale (18) et comprenant un dispositif d'ajustage axial (26, 27) pouvant être disposé à la sortie de la fente de guidage et permettant d'ajuster la lame de coupe (18) axialement dans la fente de guidage (17), caractérisé en ce qu'au moins un premier moyen de serrage (32), pouvant déplacer la lame de coupe (18) en direction axiale, comprenant au moins une face d'engagement (35) conçue en forme bombée sur la lame de coupe (18), peut être positionné dans un segment de guidage (31) vers la face frontale (33) de la lame de coupe (18), le moyen de serrage (32) étant ajustable avec au moins un autre moyen de serrage (36) s'écartant de la direction de déplacement du moyen de serrage (32).

2. Outil à manche rotatif selon la revendication 1, caractérisé en ce que le premier moyen de serrage (32) est conçu en forme de bille.

3. Outil à manche rotatif selon la revendication 1, caractérisé en ce que le premier moyen de serrage (32) est prévu sous la forme d'un élément de serrage en forme de cheville avec une surface d'engagement (35) bombée disposée vers la face frontale (33) de la lame de coupe (18).

4. Outil à manche rotatif selon la revendication 1, caractérisé en ce que l'application de force entre le moyen de serrage (32) et l'autre moyen de serrage (36) est prévue suivant un angle compris entre 1° et 89°.

5. Outil à manche rotatif selon la revendication 1, caractérisé en ce que l'application de force entre le moyen de serrage (32) et l'autre moyen de serrage (36) est prévue suivant un angle se trouvant dans un domaine plus ou moins égal à 50°.

6. Outil à manche rotatif selon la revendication 1, caractérisé en ce que l'application de force entre le moyen de serrage (32) et l'autre moyen de serrage (36) s'effectue à environ 45°.

7. Outil à manche rotatif selon l'une quelconque des revendications précédentes, caractérisé en ce que le moyen de serrage (32) est disposé dans un segment de guidage (31) d'axe parallèle à l'axe de rotation (11).

8. Outil à manche rotatif selon l'une quelconque des revendications 1 à 4, caractérisé en ce que l'au moins un moyen de serrage (32) est disposé dans un segment de guidage (31) qui est incliné vers l'intérieur au moins légèrement par rapport à un axe de rotation (11).

9. Outil à manche rotatif selon l'une quelconque des revendications précédentes, caractérisé en ce que le segment de guidage (31) est formé en tant qu'alésage pour recevoir l'au moins un moyen de serrage (32).

10. Outil à manche rotatif selon l'une quelconque des revendications 1 à 6, caractérisé en ce que le corps de base (12) présente un évidement (46) à bords ouverts à la sortie de la fente de guidage (17), lequel peut être fermé par un élément de recouvrement (41) et forme un segment de guidage (31).

11. Outil à manche rotatif selon l'une quelconque des revendications précédentes, caractérisé en ce que le moyen de serrage (32) est conçu en tant que bille d'acier.

12. Outil à manche rotatif selon l'une quelconque des revendications précédentes, caractérisé en ce que l'autre moyen de serrage (36) peut être disposé dans un segment de guidage (34) qui s'étend essentiellement radialement au réglage axial.

13. Outil à manche rotatif selon l'une quelconque des revendications précédentes, caractérisé en ce que l'autre moyen de serrage (36) est conçu sous la forme d'une cheville (40) susceptible d'être déplacée axialement dans le segment de guidage (34), avec une face biseautée (39) tournée vers le segment de guidage (31) .

14. Outil à manche rotatif selon l'une quelconque des revendications 1 à 11, caractérisé en ce que l'autre moyen de serrage (36) est conçu en tant que bille d'acier.

15. Outil à manche rotatif selon l'une quelconque des revendications précédentes, caractérisé en ce qu'il est prévu un moyen d'ajustage (37) pouvant être disposé dans le segment de guidage (34), et permettant de déplacer le moyen de serrage (36) axialement dans le segment de guidage (34).

16. Outil à manche rotatif selon la revendication 14, caractérisé en ce que le moyen d'ajustage (37) est conçu en tant que vis sans tête.

17. Outil à manche rotatif selon l'une quelconque des revendications précédentes, caractérisé en ce que la face frontale (33) de la lame de coupe (18) est prévue pour s'étendre vers l'extérieur à angle droit par rapport à l'axe de rotation (11).

18. Outil à manche rotatif selon l'une quelconque des revendications 1 à 15, caractérisé en ce que la face frontale (33) de la lame de coupe (18) est prévue suivant un angle inférieur à 90° par rapport à la fente de guidage (17) de la lame de coupe (18).

19. Outil à manche rotatif selon l'une quelconque des revendications précédentes, caractérisé en ce que plusieurs moyens de serrage (32) disposés les uns derrière les autres peuvent être disposés dans le segment de guidage (31).

20. Outil à manche rotatif selon l'une quelconque des revendications précédentes, caractérisé en ce que plusieurs moyens de serrage (32) disposés les uns derrière les autres peuvent être disposés dans le segment de guidage (36).

21. Outil à manche rotatif selon l'une quelconque des revendications précédentes, caractérisé en ce que la dimension maximale de la zone d'ajustage du dispositif d'ajustage axial (26, 27) peut être déterminée par le diamètre du moyen de serrage (32).

22. Outil à manche rotatif selon l'une quelconque des revendications précédentes, caractérisé en ce que le segment de guidage (34) peut être guidé radialement vers l'extérieur dans une zone entre des nervures de guidage (28).
